# EUROPEAN PATENT APPLICATION

(11) **EP 4 793 261 A1**
(43) Date of publication of application: **19.08.2026**
(21) Application number: 26153687.4
(22) Date of filing: 23.01.2026
(51) Int. Cl.: C04B 38/00, C04B 35/565, C04B 35/581, C04B 35/584, C04B 35/626, C04B 35/638

(54) **CERAMIC BODY AND ELECTRIC HEATER**

(30) Priority: 13.02.2025 JP 2025021748
(71) Applicant: NGK Insulators, Ltd., Nagoya-shi, Aichi 467-8530 (JP)
(72) Inventor: ANDO, Katsunori, Nagoya-shi, Aichi, 467-8530 (JP); NOGUCHI, Hiroaki, Nagoya-shi, Aichi, 467-8530 (JP); INOUE, Takayuki, Nagoya-shi, Aichi, 467-8530 (JP)
(74) Representative: MERH-IP Matias Erny Reichl Hoffmann Patentanwälte PartG mbB

(57) **Abstract**

A ceramic body according to this invention contains: a plurality of ceramic particles 1 including one or more selected from silicon carbide, silicon nitride, and aluminum nitride; a silicon phase 2 existing between the plurality of ceramic particles 1 and having a dopant dissolved in solid solution therein; and a plurality of dopant particles 3 existing in the silicon phase 2 and containing the dopant. The dopant is a Group 13 element or a Group 15. A content of the silicon phase 2 in the ceramic body is 20 to 80 % by mass. A porosity of the ceramic body is 30% or less.

## Description

### FIELD OF THE INVENTION

This invention relates to a ceramic body and an electric heater.

### BACKGROUND OF THE INVENTION

Industrial heaters are used to heat objects in various products and production facilities, and one such heater is an electric heater using a honeycomb structure. In an electric heater, electrodes are disposed on a honeycomb structure made of conductive ceramics, and the honeycomb structure can be heated through electrical conduction.

For example, Patent Literature 1 proposes a honeycomb structure that contains particles including one or more selected from silicon carbide, silicon nitride, and aluminum nitride, and silicon doped with a dopant, wherein the dopant is a Group 13 element or a Group 15 element, the silicon content is 20 to 80 % by mass, and the porosity is 30% or less. This honeycomb structure can suppress the generation of excess current because the amount of dopant in the silicon is controlled.

Patent Literature 2 proposes a honeycomb structure in which partition walls and an outer peripheral wall are composed of ceramics containing silicon carbide and silicon, and an oxide film having a thickness of 0.1 µm to 5.0 µm is formed on the silicon surface. This honeycomb structure has an excellent balance between oxidation resistance and thermal shock resistance because the predetermined oxide film is provided.

### PRIOR ART

### Patent Literatures

[Patent Literature 1] Japanese Patent Application Publication No. 2022-142543 A
[Patent Literature 1] Japanese Patent Application Publication No. 2022-145495 A

### SUMMARY OF THE INVENTION

### Problem to be Solved by the Invention

The honeycomb structures of Patent Literatures 1 and 2 are mainly used as catalyst supports for purifying automobile exhaust gas and are not suitable for use in other applications. In particular, various heaters for industrial use are sometimes required to continue to generate heat in high temperature environments (e.g., 600 to 1200°C), but the honeycomb structures of Patent Literatures 1 and 2 have difficulty in continuing to generate heat in high temperature environments.

This invention has been made to solve the above problems, and an object of this invention is to provide a ceramic body that can be used in an electric heater capable of continuously generating heat for a long period of time in a high temperature environment.

Another object of the present invention is to provide an electric heater that can continuously generate heat for a long period of time in a high temperature environment.

### Means for Solving the Problem

In order for an electric heater to continue to generate heat over a long period of time in a high temperature environment, it is required to suppress the resistance increase of the ceramic body used in the electric heater in a high temperature environment. As a result of intensive studies for ceramic bodies, the present inventors have found that the cause of the resistance increase of ceramic bodies in the high temperature environment is a decrease in the amount of dopant dissolved in solid solution in a silicon phase in a high temperature environment. Therefore, the present inventors have found that by allowing a dopant to remain as a solid phase (dopant particles) in a silicon phase existing between ceramic particles, even when the amount of dopant dissolved in solid solution in the silicon phase decreases in a high temperature environment, the dopant in the dopant particles dissolves in solid solution in the silicon phase and maintains the amount of dopant in the silicon phase, and as a result, the resistance increase can be suppressed, thereby completing this invention. In other words, this invention is exemplified as follows:
<1> A ceramic body comprising:
   a plurality of ceramic particles including one or more selected from silicon carbide, silicon nitride, and aluminum nitride;
   a silicon phase existing between the plurality of ceramic particles and having a dopant dissolved in solid solution therein; and
   a plurality of dopant particles existing in the silicon phase and containing the dopant,
   wherein the dopant is a Group 13 element or a Group 15 element,
   a content of the silicon phase in the ceramic body is 20 to 80 % by mass, and
   a porosity of the ceramic body is 30% or less.
<2> The ceramic body according to <1>, wherein the silicon phase is present as a continuous phase.
<3> The ceramic body according to <1> or <2>, wherein the ceramic body has a content of the dopant in the dopant particles of 0.001 % by mass or more.
<4> The ceramic body according to any one of <1> to <3>, wherein a silicon oxide film is formed on at least part of a surface and/or interior of the ceramic body, and the ceramic body has a content of the silicon oxide film of 0.1 % by mass or more.
<5> The ceramic body according to any one of <1> to <4>, wherein a concentration of the dopant dissolved in solid solution in the silicon phase is 1 × 10¹⁶ to 5 × 10²⁰/cm³.
<6> The ceramic body according to any one of <1> to <5>, wherein the ceramic body is a honeycomb structure comprising an outer peripheral wall and partition walls provided on an inner side of the outer peripheral wall, the partition walls defining a plurality of cells each extending from a first end face to a second end face of the honeycomb structure.
<7> The ceramic body according to any one of <1> to <6>, wherein the ceramic body is used in an electric heater.
<8> An electric heater comprising the ceramic body according to any one of <1> to <7>.
<9> The electric heater according to <8>, further comprising a pair of electrode portions provided on the ceramic body, and electrode terminals connected to the pair of electrode portions.

### Effects of the Invention

According to this invention, it is possible to provide a ceramic body that can be used in an electric heater capable of continuously generating heat for a long period of time in a high temperature environment.

Also, according to this invention, it is possible to provide an electric heater that can continuously generate heat for a long period of time in a high temperature environment.

### BRIEF DESCRIPTION OF THE DRAWINGS

FIG. 1 is a partial schematic cross-sectional view of a ceramic body according to an embodiment of this invention;
FIG. 2 is a perspective view of an electric heater according to an embodiment of this invention; and
FIG. 3 is a front view of a surface of another electric heater according to an embodiment of this invention, which is orthogonal to an extending direction of cells.

### DETAILED DESCRIPTION OF THE INVENTION

A ceramic body according to this invention contains: a plurality of ceramic particles including one or more selected from silicon carbide, silicon nitride, and aluminum nitride; a silicon phase existing between the plurality of ceramic particles and having a dopant dissolved in solid solution therein; and a plurality of dopant particles existing in the silicon phase and containing the dopant. The dopant is a Group 13 element or a Group 15. A content of the silicon phase in the ceramic body is 20 to 80 % by mass. A porosity of the ceramic body is 30% or less. The above configuration of the ceramic body of this invention allows the dopant in the dopant particles to dissolve in solid solution in the silicon phase and maintain the amount of dopant in the silicon phase (in particular, maintain it at the solid solution limit) even when the amount of dopant dissolved in solid solution in the silicon phase decreases in a high temperature environment. As a result, the resistance increase of the ceramic body in a high temperature environment can be suppressed, enabling the ceramic body to continue to generate heat for a long period of time in a high temperature environment when it is used in an electric heater.

Hereinafter, embodiments of the invention will be specifically described with reference to the drawings. It should be understood that the invention is not limited to the following embodiments, and those which have appropriately added changes, improvements and the like to the following embodiments based on knowledge of a person skilled in the art without departing from the spirit of the invention fall within the scope of the invention.

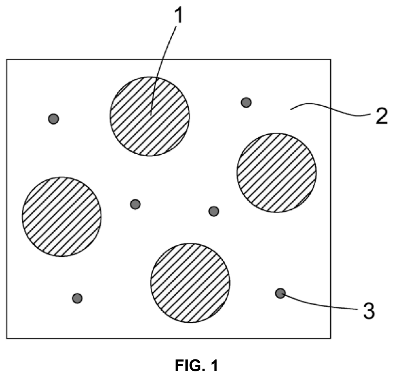

FIG. 1 is a partial schematic cross-sectional view of a ceramic body according to an embodiment of the present invention.

As shown in FIG. 1, the ceramic body according to this invention contains ceramic particles 1, a silicon phase 2, and dopant particles 3. It should be noted that FIG. 1 illustrates a ceramic body with a porosity of 0% (no pores), but pores may be present.

The ceramic particles 1 include one or more selected from silicon carbide, silicon nitride and aluminum nitride. The ceramic particles 1 containing these materials function as aggregate particles of the ceramic body, thus making the ceramic body stronger. In particular, it is preferable that the main component of the ceramic particles 1 be silicon carbide, because the thermal conductivity is higher and the difference in coefficient of thermal expansion between the main comonent and the silicon phase 2 is smaller. The phrase "the main component of the ceramic particles 1 is silicon carbide" means that the percentage of silicon carbide in the ceramic particles 1 is 80 % by mass or more, preferably 90 % by mass or more.

The percentage of each component in the ceramic particles 1 is determined by observing a cross-section of the ceramic body to identify the ceramic particles 1 and measuring the amount of each component contained in the ceramic particles 1 by X-ray fluorescence spectroscopy.

The silicon phase 2 exists between the plurality of ceramic particles 1 and has the dopant dissolved in solid solution therein. Dissolving the dopant in solid solution in the silicon phase 2 effectively lowers the volume resistivity of the ceramic body.

The content of the silicon phase 2 in the ceramic body is 20 to 80 % by mass. By setting the content of the silicon phase 2 to 20 % by mass or more, the volume resistivity of the ceramic body is reduced, thereby effectively suppressing the generation of excess current, and the balance between strength and Young's modulus of the ceramic body becomes good, thereby enabling thermal shock resistance to be enhanced. The shape stability of the ceramic body can be improved by setting the content of the silicon phase 2 to 80 % by mass or less. From the viewpoint of stably ensuring the above effects, the content of the silicon phase 2 in the ceramic body is preferably 30 to 80 % by mass, and more preferably 40 to 80 % by mass.

The content of the silicon phase 2 in the ceramic body is determined as follows: First, the amount of silicon is measured in a cross section of the ceramic body by X-ray fluorescence spectroscopy. The amount of silicon measured at this time includes the amount of silicon contained in the ceramic particles 1 (silicon carbide, silicon nitride, etc.) in addition to the amount of silicon in the silicon phase 2. Therefore, the value obtained by subtracting the amount of silicon in the ceramic particles 1 measured above from the measured amount of silicon is taken as the content of the silicon phase 2. If a silicon oxide film described below is formed on at least part of the surface and/or interior of the ceramic body, the amount of silicon contained in the silicon oxide film is also included in the amount of silicon measured by X-ray fluorescence spectroscopy. Therefore, the amount of silicon is calculated from the content of the silicon oxide film measured by the method described below, and the value obtained by further subtracting this amount of silicon is taken as the content of the silicon phase 2.

In the ceramic body, it is preferable that the silicon phase 2 is present as a continuous phase. If the silicon phase 2 is a continuous phase, it is easier to control the volume resistivity of the ceramic body to be low. Here, the phrase "the silicon phase 2 is present as a continuous phase" means that the ceramic body has a matrix-domain structure with the silicon phase 2 as a matrix and the ceramic particles 1 as a domain.

The dopant dissolved in solid solution in the silicon phase 2 is a Group 13 element or a Group 15 element.

Here, Group 13 elements refer to boron (B), aluminum (Al), gallium (Ga), indium (In), and the like, and Group 15 elements refer to nitrogen (N), phosphorus (P), arsenic (As), antimony (Sb), bismuth (Bi), and the like. The dopant dissolved in solid solution in the silicon phase 2 may contain more than one type of elements, as long as they are elements belonging to the same group, because they can exhibit conductivity without being affected by counter-doping.

As the dopant, one or two types selected from B and Al, or one or two types selected from N and P are preferred.

The concentration of the dopant dissolved in solid solution in the silicon phase 2 is not particularly limited and may be adjusted as appropriate according to the volume resistivity required for the ceramic body, but it is preferably 1×10¹⁶ to 5×10²⁰/cm³, more preferably 5×10¹⁷ to 5×10²⁰/cm³. By controlling the concentration of the dopant within this range, it becomes easier to reduce the volume resistivity of the ceramic body. In general, the volume resistivity of the ceramic body tends to decrease as the concentration of the dopant dissolved in solid solution in the silicon phase 2 increases, and tends to increase as the concentration of the dopant dissolved in solid solution in the silicon phase 2 decreases.

The concentration of the dopant dissolved in solid solution in the silicon phase 2 can be determined according to the silicon separation ICP emission spectroscopy method specified in JIS G1322-3: 2010 "Methods for analysis of metal silicon". Specifically, the ceramic body is decomposed with nitric acid and hydrofluoric acid, perchloric acid is added, and the mixture is heated to generate white fumes of perchloric acid; silicon is volatilized as silicon tetrafluoride and separated, and then the salts are dissolved in water. The boron contained in the solution is then measured by ICP emission spectrometry, and the concentration of boron in silicon is calculated. This calculated boron concentration is taken as the concentration of boron dissolved in solid solution in the silicon phase 2. It should be noted that dopants other than boron can also be measured by the same method.

The dopant particles 3 exists in the silicon phase 2 and contain the dopant. The dopant is the same type as the dopant dissolved in solid solution in the silicon phase 2. Therefore, the dopant contained in the dopant particles 3 is a Group 13 element or a Group 15 element. By having the dopant particles 3 present in the silicon phase 2, even when the amount of the dopant dissolved in solid solution in the silicon phase 2 decreases in a high temperature environment, the dopant in the dopant particles 3 can dissolve in solid solution in the silicon phase 2 and maintain the amount of the dopant in the silicon phase (in particular, maintain it at the solid solution limit). As a result, the resistance increase of the ceramic body in a high temperature environment can be suppressed, enabling the ceramic body to continue to generate heat for a long period of time in a high temperature environment when used in an electric heater.

The dopant particles 3 can be present in the silicon phase 2 in the form of various compounds. Specifically, they can be present in the silicon phase 2 as compounds such as carbides, nitrides, and borides. Examples of the compounds include B₄C, TiB₂, BN, AIN, GaN, InN, and Al₄C₃.

The content of the dopant in the dopant particles 3 in the ceramic body is preferably 0.001 % by mass or more, more preferably 0.002 % by mass or more, and still more preferably 0.003 % by mass or more. By controlling the content of the dopant in the dopant particles 3 in the ceramic body within such a range, the effect of the dopant in the dopant particles 3 dissolving in solid solution in the silicon phase 2 and maintaining the amount of the dopant in the silicon phase (in particular, maintaining it at the solid solution limit) in a high temperature environment can be stably ensured.

Since the effect described above becomes easier to obtain as the content of the dopant in the dopant particles 3 in the ceramic body increases, the upper limit is not particularly limited, but it is, for example, 5.000 % by mass or less, 4.000 % by mass or less, or 3.000 % by mass or less. When the content of the dopant in the dopant particles 3 in the ceramic body is within this range, it becomes difficult for properties such as the strength of the ceramic body to be deteriorated.

The content of the dopant in the dopant particles 3 in the ceramic body can be measured by the following method: First, a total of five samples are taken from the ceramic body from near the center in the height and radial directions. The size of one sample is 1 cm³ (1 cm × 1 cm × 1 cm cubic shape). The sample is observed by SEM (Scanning Electron Microscope) at magnifications of 1000 to identify the dopant particles 3, and then the dopant particles 3 are analyzed by SIMS (Secondary Ion Mass Spectrometry) to determine the content of the dopant in the dopant particles 3 in the ceramic body. The average value of the contents in the five samples is taken as the result of the content of the dopant in the dopant particles 3 in the ceramic body.

A porosity of the ceramic body is 30% or less. By reducing the porosity of the ceramic body to 30% or less, the thermal conductivity of the ceramic body is improved, which also increases thermal shock resistance. From the viewpoint of stably ensuring these effects, the porosity of the ceramic body is preferably 20% or less, and more preferably 10% or less. The lower limit of the porosity of the ceramic body is not particularly limited and may be 0% (i.e., no pores present).

The porosity of the ceramic body is a value measured by a mercury porosimeter.

It is preferable that a silicon oxide film be formed on at least part of the surface and/or the interior of the ceramic body. In addition, the content of the silicon oxide film in the ceramic body is preferably 0.1% by mass or more. By forming a silicon oxide film on at least part of the surface and/or the interior of the ceramic body, the balance between oxidation resistance and thermal shock resistance of the ceramic body in a high temperature environment can be improved. From the viewpoint of stably ensuring these effects, the content of the silicon oxide film in the ceramic body is preferably 0.2% by mass or more, and more preferably 0.3% by mass or more. The upper limit of the content of the silicon oxide film in the ceramic body is not particularly limited, but it may be, for example, 5.0% by mass, 4.0% by mass, or 3.0% by mass.

Here, the "surface" of the ceramic body on which the silicon oxide film can be formed refers to a surface of the ceramic body on which silicon is exposed. Likewise, the "interior" of the ceramic body on which the silicon oxide film can be formed refers to a pore surface of the ceramic body on which silicon is exposed.

The content of the silicon oxide film in the ceramic body can be calculated based on molecular weight calculation, on the assumption that all of the oxygen element measured by an inert gas fusion infrared absorption method is attributed to the silicon oxide film.

The shape of the ceramic body is not particularly limited and can be appropriately selected depending on the intended use of the electric heater to be employed. For example, the ceramic body may have a honeycomb structure. The ceramic body having a honeycomb structure (hereinafter, referred to as a "honeycomb structure") can include an outer peripheral wall, and partition walls provided on an inner side of the outer peripheral wall, the partition walls defining a plurality of cells each extending from a first end face to a second end face of the honeycomb structure. By having the honeycomb structure, a fluid flowing through the cells can be easily heated.

Production of the ceramic body can be performed according to a known method. For example, the ceramic body can be produced in accordance with the method as described below.

For example, first, a forming material is prepared by adding a binder, surfactant, water, etc. to ceramic powder containing the ceramic particles 1 and the dopant particles 3.

Examples of the binder include methyl cellulose, hydroxypropyl methyl cellulose, hydroxypropoxyl cellulose, hydroxyethyl cellulose, carboxymethyl cellulose, and polyvinyl alcohol. The content of the binder is preferably 2.0 to 10.0 parts by mass when the mass of the ceramic powder is 100 parts by mass. The content of the binder is preferably 2.0 to 10.0 parts by mass when the mass of ceramic powder is 100 parts by mass.

The content of water is preferably 20 to 60 parts by mass when the mass of the ceramic powder is 100 parts by mass.

As the surfactant, ethylene glycol, dextrin, fatty acid soaps, polyalcohols, and the like can be used. These may be used alone or in combination of two or more. The content of the surfactant is preferably 0.1 to 2.0 parts by mass when the mass of the ceramic powder is 100 parts by mass.

A pore former may be added to the forming material as needed. Examples of the pore former include starch, foamed resins, and water-absorbent resins.

Next, the resulting forming material is kneaded to form a green body, which is then formed to produce a ceramic formed body. In particular, when producing a ceramic formed body having a honeycomb structure (hereinafter referred to as "a honeycomb formed body"), the green body is extruded to produce a green (unfired) honeycomb formed body. In the extrusion, a die having a desired overall shape, cell shape, partition wall thickness, cell density, and the like can be used.

Next, the resulting ceramic formed body (honeycomb formed body) is dried and degreased to produce a ceramic degreased body (honeycomb degreased body). The degreasing step is performed at 300 to 500°C in an atmospheric, inert, or reduced-pressure atmosphere. Thereafter, under a reduced pressure inert gas or in a vacuum, the ceramic degreased body (honeycomb degreased body) is impregnated with silicon (metallic silicon) having the dopant dissolved in solid solution and is fired. By this impregnation and firing, the pores in the ceramic degreased body (honeycomb degreased body) are filled and solidified with molten silicon, thereby enabling the porosity of the ceramic body (honeycomb structure) to be reduced to 30% or less. The inert atmosphere includes a nitrogen gas atmosphere, a noble gas atmosphere such as argon, or a mixture of these gases. Examples of the method for impregnation and firing of silicon having the dopant dissolved in solid solution include a method of placing a lump containing the silicon having the dopant dissolved in solid solution so as to be in contact with the ceramic degreased body (honeycomb degreased body) and firing them.

The firing temperature is preferably 1350°C or higher, more preferably 1400°C or higher, and still more preferably 1450°C or higher in order to achieve sufficient sintering. In addition, the firing temperature is preferably 2200°C or lower, more preferably 1800°C or lower, and still more preferably 1600°C or lower in order to reduce the production cost during firing.

To ensure sufficient sintering, the heating time of the ceramic degreased body (honeycomb degreased body) at the above firing temperature is preferably 0.25 hours or longer, more preferably 0.5 hours or longer, and still more preferably 0.75 hours or longer. In addition, in order to reduce the production cost during firing, the heating time of the ceramic degreased body (honeycomb degreased body) at the above firing temperature is preferably 5 hours or shorter, more preferably 4 hours or shorter, and still more preferably 3 hours or shorter.

In addition, after impregnation and firing, it is preferable to perform oxidation treatment at 1000 to 1350°C for 1 to 300 hours in order to improve durability. The oxidation treatment means heat treatment in an oxidizing atmosphere (e.g., in air or in the atmosphere). This heat treatment can form a silicon oxide film on at least part of the surface and/or interior of the ceramic body (honeycomb structure).

The ceramic body according to the embodiment of the present invention can generate heat by Joule heat when an electric current is applied. In addition, even when the amount of the dopant dissolved in solid solution in the silicon phase 2 decreases in a high temperature environment, this ceramic body can allow the dopant in the dopant particles 3 to dissolve in solid solution in the silicon phase 2 and maintain the amount of the dopant in the silicon phase (in particular, maintain it at the solid solution limit). Therefore, the ceramic body according to the embodiment of the present invention can be used in an electric heater, thereby allowing the electric heater to continue to generate heat for a long period of time in a high temperature environment.

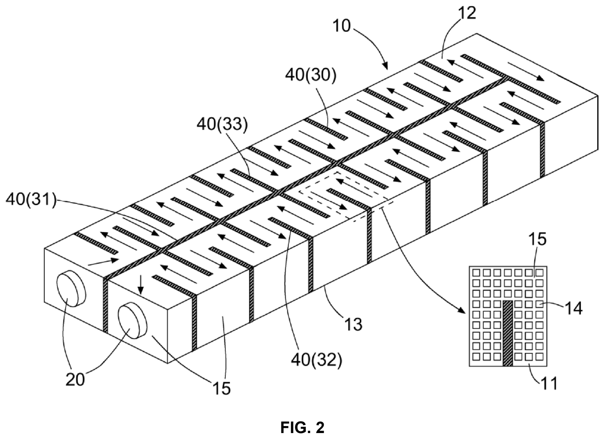

The electric heater according to an embodiment of the present invention includes the ceramic body described above. An example of this electric heater is shown in FIG. 2. FIG. 2 is a perspective view of an electric heater according to an embodiment of this invention.

The electric heater shown in FIG. 2 includes a ceramic body having a honeycomb structure (hereinafter referred to as "the honeycomb structure portion 10"), a pair of electrode portions 20, a slit 30, and a filler 40.

The honeycomb structure portion 10 has an outer peripheral wall 11 and partition walls 15 provided on an inner side of the outer peripheral wall 11, the partition walls 15 defining a plurality of cells 14, each of the cells 14 extending from a first end face 12 to a second end face 13 of the honeycomb structure portion 10. The plurality of cells 14 serve as flow paths for a fluid. The pair of electrode portions 20 are disposed on the outer peripheral wall 11. One or more slits 30 are provided in the honeycomb structure portion 10. At least part of the space in the slit 30 is filled with the filler 40. It should be noted that FIG. 2 shows an example in which all of the space of the slit 30 is filled with the filler 40, but the filler 40 may also be filled in only a portion of the space of the slit 30.

The honeycomb structure having the above structure can cause the honeycomb structure portion 10 to generate heat by Joule heat when passing an electric current from the pair of electrode portions 20 to the honeycomb structure portion 10.

When the main component of the honeycomb structure portion 10 is silicon carbide or a silicon-silicon carbide composite, the filler 40 preferably contains at least 20 % by mass of silicon carbide, and more preferably 20 to 70 % by mass. When the main component of the honeycomb structure portion 10 is silicon carbide or a silicon-silicon carbide composite, the filler 40 preferably contains at least 20 % by mass of silicon carbide, and more preferably 20 to 70 % by mass. The filler 40 may also contain 30 % by mass or more of silica, alumina, and the like. It is preferable that the Young's modulus of the filler 40 is 500 kPa or more and 1500 MPa or less. This range allows the slit 30 to efficiently buffer stress during thermal shock, while maintaining the mechanical strength of the slit 30 and suppressing chipping and cracking during fabrication and use. From the viewpoint of stably ensuring this effect, it is still more preferable that the Young's modulus of the filler 40 is 10 to 1000 MPa.

The honeycomb structure portion 10 has a pillar shape and a thickness in the extending direction of the cells 14. The ratio (aspect ratio) between the length in the extending direction of the cells 14 of the honeycomb structure portion 10 and the width or diameter of each end face (first end face 12, second end face 13) is not particularly limited. In addition, the pillar shape may include a shape (flat shape) in which the length of the honeycomb structure portion 10 in the extending direction of the cells 14 is shorter than the width or diameter of each end face (first end face 12, second end face 13).

The outer shape of the honeycomb structure portion 10 is not particularly limited and can be, for example, a pillar shape with circular end faces (cylindrical shape), a pillar shape with oval end faces, a pillar shape with polygonal end faces (quadrangular, pentagonal, hexagonal, heptagonal, octagonal, etc.), and the like. It should be noted that the outer shape of the honeycomb structure portion 10 in FIG. 2 is shown as an example of a pillar shape with each end face being quadrangular (rectangular). Further, from the viewpoint of enhancing heat resistance (suppressing cracks that enter in the circumferential direction of the outer peripheral wall 11), the area of each end face of the honeycomb structure portion 10 is preferably 2000 to 65,000 mm², and more preferably 5000 to 25,000 mm².

The shape of the cells 14 in a plane orthogonal to the extending direction of the cells 14 (end face or cross section of the honeycomb structure portion 10) is not particularly limited, but examples include quadrangular, hexagonal, octagonal, or a combination thereof. Among these shapes of each cell, the quadrangle or the hexagon is preferable. With such a shape of the cells 14, the pressure loss when a fluid such as an exhaust gas flows through the honeycomb structure portion 10 can be reduced.

The thickness of the outer peripheral wall 11 is not particularly limited, but from the viewpoint of ensuring the structural strength of the honeycomb structure portion 10 and suppressing leakage of fluid flowing through the cells 14 from the outer peripheral wall 11, it is preferably 0.05 mm or more, more preferably 0.10 mm or more, and still more preferably 0.15 mm or more. However, if the outer peripheral wall 11 is made too thick, it may become too high in strength, and the strength balance with the partition walls 15 may be lost, resulting in reduced thermal shock resistance. Therefore, the thickness of the outer peripheral wall 11 is preferably 4.0 mm or less, more preferably 3.0 mm or less, and still more preferably 2.0 mm or less.

It should be noted that the thickness of the outer peripheral wall 11 means the thickness in the normal direction to the tangent line of the outer peripheral wall 11 at a measurement position when the position of the outer peripheral wall 11 where the thickness is to be measured is observed in a plane orthogonal to the extending direction of the cells 14.

The thickness of the partition walls 15 is not particularly limited, but it is preferably 0.05 to 0.8 mm, and more preferably 0.1 to 0.6 mm. By setting the thickness of the partition walls 15 to 0.05 mm or more, a decrease in the strength of the honeycomb structure portion 10 can be suppressed. By setting the thickness of the partition walls 15 to 0.8 mm or less, an increase in pressure loss when an exhaust gas is caused to flow can be suppressed, for example, when the honeycomb structure portion 10 is used as a catalyst support.

It should be noted that the thickness of the partition walls 15 as used herein refers to a length of a portion passing through the partition wall 15 in a line segment connecting the centers of gravity of adjacent cells 14 to each other in a plane orthogonal to the extending direction of the cells 14.

The cell density of the honeycomb structure portion 10 is not particularly limited, but it is preferably 4 to 150 cells/cm², and more preferably 7 to 100 cells/cm². By controlling the cell density within such a range, the pressure loss when a fluid such as exhaust gas flows through the structure can be reduced.

As used herein, the "cell density" refers to a value obtained by dividing the number of cells by the area of one end face of the honeycomb structure portion 10 (excluding the outer peripheral wall 11).

The slits 30 provided in the honeycomb structure portion 10 are formed by omitting or removing at least a part of the outer peripheral wall 11 and/or the partition walls 15. Each slit 30 may extend from the first end face 12 to the second end face 13 of the honeycomb structure portion 10.

The pair of electrode portions 20 is formed of a conductive material. The conductive material used for the pair of electrode portions 20 is not particularly limited, but it is preferably an oxide ceramic, or a mixture of a metal or a metal compound and an oxide ceramic. The metal may be either an elemental metal or an alloy, and examples of the metal that can suitably be used herein include silicon, aluminum, iron, stainless steel, titanium, tungsten, and Ni-Cr alloys. Examples of the metal compound include those other than oxide ceramics, such as metal oxides, metal nitrides, metal carbides, metal silicides, metal borides, and composite oxides. Specific examples include FeSi₂, CrSi₂, alumina, silica, and titanium oxide. The metal and the metal compound may be used alone or in combination of two or more. Specific examples of the oxide ceramic include glass, cordierite, mullite and the like. The glass may further contain an oxide comprising at least one component selected from the group consisting of B, Mg, Al, Si, P, Ti, and Zr.

The thickness of the pair of electrode portions 20 is not particularly limited, but it is preferably from 0.01 to 5 mm, and more preferably from 0.01 to 3 mm. By controlling the thickness within such a range, the honeycomb structure can be caused to generate heat uniformly. When the thickness of the pair of electrode portions 20 is 0.01 mm or more, the electrical resistance can be appropriately controlled, enabling more uniform heat generation. When the thickness of the pair of electrode portions 20 is 5 mm or less, the risk of breakage is reduced.

As used herein, the thickness of a pair of electrode portions 20 refers to a thickness in the normal direction to a tangent line at a measurement position on the outer surface of the electrode portion 20, when observed in a plane orthogonal to the extending direction of the cells 14.

The electrical resistivity of the pair of electrode portions 20 is not particularly limited, but it is preferably from 1×10⁻⁷ to 5×10⁻¹ Ω·m, more preferably from 5×10⁻⁷ to 2.5×10⁻¹ Ω·m, and even more preferably from 1×10⁻⁶ to 1.25×10⁻¹ Ω·m. In particular, by setting the electrical resistivity of the pair of electrode portions 20 to 5×10⁻¹ Ω·m or less, the resistance during energized heating can be reduced.

As used herein, the electrical resistivity of the pair of electrode portions 20 means a value measured at 400°C by the four-terminal method.

The position of the pair of electrode portions 20 is not particularly limited, as long as they are provided on the outer peripheral wall 11 of the honeycomb structure portion 10. Similarly, the position of the slit 30 provided in the honeycomb structure portion 10 is not particularly limited. For example, in one embodiment of the honeycomb structure, as shown in FIG. 2, the pair of electrode portions 20 are arranged on one flat surface of the outer peripheral wall 11 of a quadrangular pillar shaped honeycomb structure portion 10, and the slits 30 may include first slits 31 each extending inward from the outer peripheral wall 11 between the pair of electrode portions 20. By controlling the positions of the pair of electrode portions 20 and the first slits 31 in this manner, the heat generation distribution in the honeycomb structure can be adjusted.

As shown in FIG. 2, the slits 30 may further include second slits 32 each extending inward from two outer peripheral walls 11 that are orthogonal to the outer peripheral wall 11 having the pair of electrode portions 20, and third slits 33 intersecting the first slits 31 and not reaching the outer peripheral wall 11. In this case, it is preferable that the second slits 32 and the third slits 33 are arranged alternately. With such a configuration, the current flows while detouring along the second slits 32 and the third slits 33 as indicated by the arrows in FIG. 2, thereby making it easier to uniformly generate heat in the honeycomb structure.

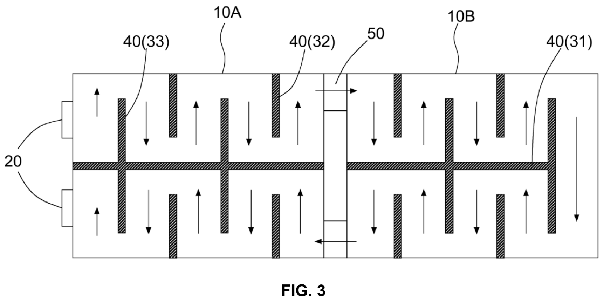

The honeycomb structure may include a plurality of honeycomb structure portions 10, and the plurality of honeycomb structure portions 10 may be connected to each other by a conductive connector 50. FIG. 3 is a front view of a cross section of a surface of an electric heater having such a structure, which is orthogonal to the extending direction of the cells.

As shown in FIG. 2, the electric heater includes a first honeycomb structure portion 10A and a second honeycomb structure portion 10B, which are connected to each other by conductive connectors 50. Even in such a structure, the current flows while detouring along the second slits 32 and the third slits 33 of the first honeycomb structure portion 10A and the second honeycomb structure portion 10B, making it easier to uniformly generate heat in the electric heater.

Two conductive connectors 50 are provided on the outer peripheral wall 11 where the first honeycomb structure portion 10A and the second honeycomb structure portion 10B face each other. Specifically, each of the two conductive connectors 50 is partially provided on the outer peripheral wall 11 at a position orthogonal to and not straddling the first slits 31.

Various materials can be used for the conductive connectors 50, such as Si-SiC composite materials or Si metal-impregnated Si-SiC composite materials.

Electrode terminals (not shown) may be connected to the pair of electrode portions 20 as needed. The shape of each electrode terminal is not particularly limited, but it may be pillar shaped. By applying a voltage to the honeycomb structure via the electrode terminals, the honeycomb structure can be easily heated by Joule heating. The applied voltage is preferably 12 to 900 V, more preferably 48 to 600 V, but may be appropriately adjusted.

The electrode terminals may be made of ceramics or carbon. When the electrode terminals are made of ceramics, electrical connection to the honeycomb structure is facilitated. A metal terminal may be joined to the tip of each electrode terminal. The joining of a ceramic or carbon electrode terminal and a metal terminal may be carried out by caulking, welding, or a conductive adhesive. Conductive metals such as iron alloys or nickel alloys may be used as the material of the metal terminal.

Examples of ceramics making up the electrode terminals include, but are not limited to, silicon carbide (SiC); metal compounds including metal silicides such as tantalum silicide (TaSi₂) and chromium silicide (CrSi₂); and composite materials (cermets) containing one or more metals, and the like. Examples of cermets include composites of metallic silicon and silicon carbide, composites of metal silicides such as tantalum silicide or chromium silicide with metallic silicon and silicon carbide, and further composites in which one or more insulating ceramics, such as alumina, mullite, zirconia, cordierite, silicon nitride, or aluminum nitride, are added from the viewpoint of reducing thermal expansion. It is preferable that carbon is a main component as carbon making up the electrode terminal. The phrase "carbon is a main component" means that the content of carbon is 50 % by mass or more of the total components making up the electrode terminal. The content of carbon is more preferably 80 % by mass or more, and even more preferably 90 % by mass or more.

On the outer peripheral wall 11 facing the partition walls 15 or the cells 14 of the honeycomb structure portions 10, a catalyst may be supported as necessary. Various catalysts may be used, including, for example, a three-way catalyst and/or nickel oxide. By supporting the catalyst, purification performance can be obtained when an exhaust gas or other fluid is passed into the cells 14.

The method for producing the electric heater according to an embodiment of the present invention is not particularly limited as long as it allows production of the honeycomb structure having the above characteristics. Hereinafter, an example of a method for producing the electric heater according to an embodiment of the present invention will be described.

The method for producing the honeycomb structure according to the embodiment of the present invention includes: an S1 step of obtaining a honeycomb formed body with electrode raw material; an S2 step of forming slits; an S3 step of firing the honeycomb formed body; and an S4 step of filling raw material for filling.

In the S1 step, a raw material for forming the electrode portions is applied to a honeycomb formed body, which is a precursor of the honeycomb structure portion 10, to obtain a honeycomb formed body with electrode raw material. Here, the honeycomb formed body refers to the unfired honeycomb structure portion 10 used to produce the honeycomb structure portion 10 described above, and it can be produced by the method described above.

Next, raw materials for forming the pair of electrode portions 20 are prepared. When the main components of the pair of electrode portions 20 are silicon carbide and silicon, it is preferable that the raw material for forming the electrode portions is prepared by adding predetermined additives to silicon carbide powder and silicon powder and kneading the mixture. Then, the obtained electrode-forming raw material is applied to a predetermined region of the outer peripheral wall 11 of the dried honeycomb formed body to obtain a honeycomb formed body with electrode raw material. The method for preparing the electrode-forming raw material and the method for applying it to the honeycomb formed body may be carried out according to known methods for producing honeycomb structures.

As another producing method, the honeycomb formed body may be fired once before applying the electrode-forming raw material in the S1 step. That is, in another producing method, a honeycomb sintered body is obtained by firing the honeycomb formed body, and the electrode-forming raw material is then applied to the honeycomb sintered body to obtain a honeycomb sintered body with electrode raw material instead of a honeycomb formed body with electrode raw material.

The S2 step is a step of forming slits at predetermined positions in the honeycomb formed body with electrode raw material. The slits are preferably formed using a router or the like. The slits are formed so as to open to predetermined positions in the honeycomb molded body with electrode raw material.

The S3 step is a step of firing the honeycomb formed body with electrode raw material to obtain a honeycomb sintered body. Before firing, the honeycomb formed body with electrode raw material may be dried. In addition, a pre-firing (degreasing) step may be carried out to remove binders in the raw material for filling before firing. The firing is preferably performed at 1400 to 1500°C for 1 to 20 hours in an inert atmosphere such as nitrogen or argon. After firing, an oxidation treatment is preferably performed at 1200 to 1350°C for 1 to 300 hours to improve durability. The pre-firing and firing methods are not particularly limited, and an electric furnace or gas furnace may be used.

In the S3 step, the honeycomb formed body with electrode raw material may also be heated at 300 to 1500°C. Such a heat treatment may be included in the pre-firing or firing described above, or may be performed separately.

The S4 step is a step of filling the raw material for filling into the slits formed in the honeycomb sintered body. In the S4 step, the raw material for filling is first prepared. The law material for filling is a raw material used to form the filler described above. For example, raw material for an insulating filler can be obtained by kneading a mixture prepared by mixing the above-described filler with a binder, surfactant, a pore former agent, water, and the like. It is preferable that the raw material for filling is in the form of a slurry.

Examples of the binder used in the raw material for filling include methyl cellulose, hydroxypropyl methyl cellulose, hydroxypropoxyl cellulose, hydroxyethyl cellulose, carboxymethyl cellulose, polyvinyl alcohol, and glycerin. The content of the binder is preferably 2.0 to 10.0 parts by mass when the mass of the ceramic powder is 100 parts by mass. The binder content is preferably 0 to 25 parts by mass when the mass of the filler material is 100 parts by mass.

The water content is preferably 15 to 75 parts by mass when the mass of the filler material is 100 parts by mass.

Examples of surfactants used in the raw material for filling include ethylene glycol, dextrin, fatty acid soaps, and polyalcohols. These may be used alone or in combination of two or more. The surfactant content is preferably 0 to 15 parts by mass when the mass of the filler material is 100 parts by mass.

The pore former used in the raw material for filling is not particularly limited as long as it forms pores after firing, and examples include graphite, starch, foamed resin, water-absorbing resin, and silica gel. The content of the pore former is preferably 0 to 85 parts by mass when the mass of the filler material is 100 parts by mass.

There is no particular limitation on the method of filling the slits in the honeycomb sintered body with the raw material for filling, but the raw material for filling may be filled into the slits using a syringe or the like. By this method, the raw material for filling can be evenly filled into the slits. Of course, the raw material for filling may also be filled into the slit using a spatula.

After the raw material for filling is filled, the heat treatment is performed to remove binder and the like contained in the raw material for filling. The conditions for the heat treatment are not particularly limited, but heating at 300 to 600°C for 0.5 to 5 hours in the air atmosphere is preferred.

### EXAMPLES

Hereinafter, the present invention will be more specifically described with reference to Examples, but the present invention is not limited to these Examples.

### <Examples 1 to 12 and Comparative Example 2>

A forming material was prepared by adding methyl cellulose and hydroxypropoxyl cellulose as binders, and a water-absorbent resin as a pore former, to a ceramic powder containing silicon carbide (SiC) powder and dopant particles shown in Table 1, and further adding water.

Next, the forming material was kneaded using a vacuum pug mill to produce a cylindrical green body, and then shaped using an extrusion molding machine having a predetermined die structure to obtain a honeycomb formed body in the form of a quadrangular pillar shape having quadrangular cells in a cross section orthogonal to the cell flow direction. The honeycomb formed body was dried by highfrequency dielectric heating, and then dried at 120°C for 2 hours using a hot-air dryer to produce a honeycomb dried body.

Next, after the honeycomb dried body was degreased, a honeycomb sintered body was obtained by impregnating silicon (metallic silicon) doped with a dopant (boron: B) with the honeycomb degreased body and sintering at 1500°C in a vacuum. Thereafter, an oxidation treatment was performed in the air atmosphere at the temperatures and duration times shown in Table 1. In Example 10, no oxidation treatment was performed. Cross-sectional observation by scanning electron microscopy (SEM) confirmed that the honeycomb structure (ceramic body) obtained in this manner had a matrix-domain structure in which silicon formed the matrix and particles such as silicon carbide formed the domains, and that the silicon was present as a continuous phase.

Silicon carbide powder, boron nitride powder, methyl cellulose, glycerin, and water were mixed using a planetary mixer to prepare an electrode-forming paste. Silicon carbide (SiC) powder, boron nitride powder, methyl cellulose, glycerin, and water were mixed using a planetary mixer to prepare a paste for forming the electrode portions. When silicon carbide (SiC) powder was set to 100 parts by mass, the amount of methyl cellulose was 0.5 parts by mass, glycerin was 10 parts by mass, and water was 38 parts by mass. Next, this electrode-forming paste was applied to a predetermined region of the honeycomb structure and fired to obtain a honeycomb structure with electrode portions.

### <Comparative Example 1>

A honeycomb structure with electrode portions was produced in the same manner as described above, with the exception that dopant particles were not blended into the forming material and no oxidation treatment was performed after the impregnation sintering.

The honeycomb structures obtained above were evaluated as follows:

### <Content of Silicon Carbide (SiC), Silicon Phase (Si), and Silicon Oxide Film (SiO₂) for Honeycomb Structure>

The contents of silicon carbide (SiC), silicon phase (Si), and silicon oxide film (SiO₂) for the honeycomb structure were determined in accordance with the method described above.

### <Porosity of Honeycomb Structure>

The porosity of the honeycomb structure was determined in accordance with the method described above.

### <Content of Dopant in Dopant Particles>

The content of the dopant in the dopant particles was determined in accordance with the method described above. Model S-3400N manufactured by Hitachi High-Tech Corporation was used as the SEM, and model NanoSIMS 50L manufactured by CAMECA was used as the SIMS.

### <Concentration of Dopant Dissolved in Solid Solution in Silicon Phase>

The concentration of the dopant dissolved in solid solution in the silicon phase was determined in accordance with the method described above. Model PS3510DD manufactured by Hitachi High-Tech Corporation was used as the ICP (Inductively Coupled Plasma) analyzer.

### <Resistance Increase Ratio>

A test sample was cut out from the obtained honeycomb structure, and a volume resistivity R₀ of the test sample was measured. The test sample was then subjected to a durability test at 950°C for 200 hours in a water vapor atmosphere, and the volume resistivity R₁ after the test was measured. Using these volume resistivities, the resistance increase ratio (R₁/R₀) was calculated.

In this evaluation, test samples with R₁/R₀ ≤ 1.6 were represented as "AA", those with 1.6 < R₁/R₀ ≤ 1.8 were represented as "A", those with 1.8 < R₁/R₀ ≤ 2.0 were represented as "B", and those with R₁/R₀ > 2.0 were represented as "C". If the resistance increase ratio is smaller than evaluation "B", it can be considered to have a high effect of suppressing resistance increase in the high temperature environment.

Table 1 shows the above evaluation results.

**[Table 1]**

| | Oxidation Treatment | | Content [mass %] | | | Porosity [%] | Dopant Particles | | Solid Solution Dopant | | Resistance Increase Ratio |
|---|---|---|---|---|---|---|---|---|---|---|---|
| | Temperature [°C] | Time (h) | Si | SiC | SiO₂ | | Type | Content of Dopant [mass %] | Type | Dopant Concentration [Number/cm³] | |
| Ex. 1 | 1250 | 168 | 45.5 | 52.7 | 1.8 | 2 | B₄C | 0.280 | B | 3 × 10²⁰ | AA |
| Ex. 2 | 1250 | 72 | 45.0 | 54.3 | 0.7 | 3 | TiB₂ | 0.005 | B | 4 × 10²⁰ | AA |
| Ex. 3 | 1350 | 72 | 44.4 | 54.5 | 1.1 | 10 | B₄C | 0.043 | B | 3 × 10²⁰ | AA |
| Ex. 4 | 1350 | 300 | 41.3 | 55.7 | 3.0 | 2 | B₄C | 1.000 | B | 4 × 10²⁰ | AA |
| Ex. 5 | 1350 | 168 | 45.0 | 53.0 | 2.0 | 5 | B₄C | 1.500 | B | 4 × 10²⁰ | AA |
| Ex. 6 | 1350 | 24 | 45.0 | 54.2 | 0.8 | 3 | B₄C | 0.002 | B | 3 × 10²⁰ | A |
| Ex. 7 | 1250 | 6 | 50.3 | 49.6 | 0.1 | 3 | B₄C | 0.050 | B | 3 × 10²⁰ | A |
| Ex. 8 | 1350 | 2 | 21.0 | 78.9 | 0.1 | 29 | TiB₂ | 0.020 | B | 3 × 10²⁰ | A |
| Ex. 9 | 1250 | 216 | 30.0 | 68.6 | 1.4 | 5 | B₄C | 0.001 | B | 4 × 10²⁰ | B |
| Ex. 10 | -- | -- | 60.0 | 40.0 | 0.0 | 15 | B₄C | 0.280 | B | 2 × 10¹⁶ | B |
| Ex. 11 | 1250 | 6 | 44.0 | 55.9 | 0.1 | 1 | BN | 0.001 | B | 3 × 10²⁰ | B |
| Ex. 12 | 1250 | 168 | 45.8 | 53.0 | 1.2 | 2 | B₄C | 0.260 | B | 5 × 10¹⁵ | B |
| Comp. 1 | -- | -- | 45.0 | 55.0 | 0.0 | 2 | -- | -- | B | 3 × 10²⁰ | C |
| Comp. 2 | 1250 | 72 | 18.0 | 81.3 | 0.7 | 39 | BN | 0.210 | B | 3 × 10²⁰ | C |

As shown in Table 1, the honeycomb structures (ceramic bodies) according to Examples 1 to 12 exhibited a resistance increase ratio that was smaller than the evaluation "B", and therefore had a higher effect of suppressing the resistance increase in the high temperature environment.

In contrast, the honeycomb structure according to Comparative Example 1 did not contain dopant particles in the silicon phase, and therefore the effect of suppressing the resistance increase in the high temperature environment was insufficient. In addition, the honeycomb structure according to Comparative Example 2 contained the excessively low amount of the silicon phase and had an excessively high porosity, and therefore the effect of suppressing the resistance increase in the high temperature environment was insufficient.

As can be seen from the above results, according to this invention, it is possible to provide a ceramic body that can be used in an electric heater capable of continuously generating heat for a long period of time in a high temperature environment. Also, according to this invention, it is possible to provide an electric heater that can continuously generate heat for a long period of time in a high temperature environment.

### Description of Reference Numerals

1 ceramic particles
2 silicon phase
3 dopant particles
10 honeycomb structure portion
10A first honeycomb structure portion
10B second honeycomb structure portion
11 outer peripheral wall
12 first end face
13 second end face
14 cell
15 partition wall
20 pair of electrode portion
30 slit
31 first slit
32 second slit
33 third slit
40 filler
50 conductive connection body

## Claims

1. A ceramic body comprising:
a plurality of ceramic particles (1) including one or more selected from silicon carbide, silicon nitride, and aluminum nitride;
a silicon phase (2) existing between the plurality of ceramic particles (1) and having a dopant dissolved in solid solution therein; and
a plurality of dopant particles (3) existing in the silicon phase (2) and containing the dopant,
wherein the dopant is a Group 13 element or a Group 15 element,
a content of the silicon phase (2) in the ceramic body is 20 to 80 % by mass, and
a porosity of the ceramic body is 30% or less.

2. The ceramic body according to claim 1, wherein the silicon phase (2) is present as a continuous phase.

3. The ceramic body according to claim 1 or 2, wherein the ceramic body has a content of the dopant in the dopant particles (3) of 0.001 % by mass or more.

4. The ceramic body according to any one of claims 1 to 3, wherein a silicon oxide film is formed on at least part of the surface and/or interior of the ceramic body, and the ceramic body has a content of the silicon oxide film of 0.1 % by mass or more.

5. The ceramic body according to any one of claims 1 to 4, wherein a concentration of the dopant dissolved in solid solution in the silicon phase (2) is 1×10¹⁶ to 5×10²⁰/cm³.

6. The ceramic body according to any one of claims 1 to 5, wherein the ceramic body is a honeycomb structure comprising an outer peripheral wall (11) and partition walls provided on an inner side of the outer peripheral wall (11), the partition walls (15) defining a plurality of cells (14) each extending from a first end face (12) to a second end face (13) of the honeycomb structure.

7. The ceramic body according to any one of claims 1 to 6, wherein the ceramic body is used in an electric heater.

8. An electric heater comprising the ceramic body according to any one of claims 1 to 7.

9. The electric heater according to claim 8, further comprising a pair of electrode portions (20) provided on the ceramic body, and electrode terminals connected to the pair of electrode portions (20).
